# EUROPEAN PATENT SPECIFICATION

(11) **EP 3 188 593 B1**
(45) Date of publication and mention of the grant of the patent: **25.10.2023**
(21) Application number: 15838359.6
(22) Date of filing: 08.09.2015
(51) Int. Cl.: A01M 25/00, A01M 23/06, A01M 23/26, A01M 23/00

(54) **RODENT TRAP HAVING IMPROVED APPARATUS TO TRAP RODENTS**
NAGERFALLE MIT VERBESSERTER VORRICHTUNG ZUM EINFANGEN VON NAGETIEREN
PIÈGE À RONGEUR ÉQUIPÉ D'UN MÉCANISME AMÉLIORÉ DE PIÉGEAGE DES RONGEURS

(30) Priority: 05.09.2014 US 201462046282 P; 05.09.2014 US 201462046260 P
(43) Date of publication of application: 12.07.2017
(73) Proprietor: AP&G Co., Inc., Brooklyn, NY 11232 (US)
(72) Inventor: FRISCH, Jonathan, Brooklyn, NY 11232 (US)
(74) Representative: Page, White & Farrer Germany LLP
(86) International application number: PCT/US2015/048884
(87) International publication number: WO 2016/037179

(56) References cited:
- WO-A1-2009/097898
- US-A- 1 382 416
- US-A- 3 223 231
- US-A- 4 385 465
- US-A- 5 953 853
- US-A- 6 088 948
- US-A- 6 088 948
- US-A1- 2008 092 431
- US-A1- 2010 199 544
- US-A1- 2011 167 709
- US-A1- 2012 324 782
- US-B2- 7 987 629

## Description

### FIELD OF THE INVENTION

The current invention relates to a bait station rodent trap, more specifically to a bait station rodent trap that can be remotely activated by a user.

### BACKGROUND OF THE INVENTION

Rodent traps and rodenticide stations are routinely used in residential and commercial settings. One commonly used trapping device is a glue board, which captures a rodent that steps on it. One problem with glue boards is that rodents may not step onto the board for a variety of reasons. For example, rodents may hesitate to step on a device that appears foreign to their environment. In addition, rodents may find the smell of the glue to be offensive, and they will avoid the trap. Still furthermore, a rodent may use its whiskers to sense the terrain of a glue board and realize that it is a surface to be avoided. There is therefore a need in the art for a glue board or similar trap that a rodent may not sense and avoid due to its offensive or foreign character until the rodent is trapped. Other traps include placing food on a surface such that when some disturbance is sensed, as when a rodent eats the food, the trap then closes on the rodent. Rodents learn about dangerous environments and will avoid traps where touching food automatically releases a trap.

US 2012324782 A1 discloses a known bait station rodent trap containing baits, and does not describe the combination of edible substances and rodenticides nor any wireless system nor gears.

US 2010/199544 A1 discloses a rodent trap comprising a glue board 46 which can contain a release layer. Removing the release layer makes the glue accessible to the rodent.

Furthermore, US 6 088 948 A discloses a rodent trap that requires two chambers (a catching unit and an underlying killing unit). The catching unit has a lower door that is maintained in a closed position. Animals entering the catching unit, are allowed to gain a certain familiarity with the trap. At a later time, the lower door is activated to swing open and cause an animal (e.g., a rat) to fall into the lower killing chamber. Significantly, once an animal is deposited in the lower chamber, carbon dioxide is piped in from a storage tank located at a distance from the killing chamber.

Additionally, US 2011/167709 A1 discloses a trap for capturing a plurality of animals. The trap is formed of an enclosure for receiving animals and a gate that is movable between an open position and a closed position. Once animals enter the enclosure, the gate may be triggered to close.

Moreover, WO 2009/097898 A1 discloses a device for killing rodents in underground pipes/wells, that is provided with sensors to detect rodents. Once so detected, a plate having downward facing spikes is deployed to kill a rodent.

Finally, US 5 953 853 A discloses a trap for killing rodents and the like having sensors to detect a rodent and then mechanically deliver the rodent to an electrocution platform. The rodent can immediately walk via an entrance to the electrocution platform without being blocked by a barrier.

### SUMMARY OF THE INVENTION

The invention is set out in the appended set of claims. The bait station rodent trap is deployed in an "inactive" state such that a rodent may become accustomed to it. After a period of time, the trap is switched into active state. Because of the preconditioning it received while the trap was inactive - a rodent will not hesitate to enter even when it becomes activated.

The rodent trap can be remotely transitioned from a deactivated state to an activated state. In the deactivated state, a rodent such as a mouse or a rat may become accustomed to stepping in or on the trap without being trapped. Once the rodent becomes accustomed to the trap, a user may remotely activate the trap. Once activated, the rodent will become trapped when it enters. The rodent can comfortably eat food for a period of time but later when the trap is activated it catches or poisons the rodent.

An important aspect of the invention is that it primes or conditions a rodent to follow a previously acceptable path, but then later it becomes trapped when following the previously acceptable path. The invention provides a non-threatening access for the rodent to the trap for a period of time, after which time the trap is set, and the rodent can be trapped.

### BRIEF DESCRIPTION OF THE DRAWINGS

Fig. 1 shows a top, perspective broken away view of a glue trap according to an embodiment which is not according to the invention and presented for illustration purposes only.
Fig. 2A is a side elevational view of the trap of Fig. 1 in an inactive state.
Fig. 2B shows the trap of Fig. 2A in an active state.
Fig. 3A is a top, perspective view of a bait station having a rotatable platform that is adaptable to dispense either edible substances or rodenticide substances according to an embodiment of the invention.
Fig. 3B is a broken away view of the bait station of Fig. 3A showing the platform being rotated according to an embodiment of the invention.
Fig. 4 is a perspective view of a dual chambered compartment or platform used with the embodiments of Figs. 3A and 3B.
Fig. 5 is a top, perspective view of a rodent trap according to another embodiment which is not according to the invention and presented for illustration purposes only.
Fig. 6 is a cross sectional view through the side of the trap of Fig. 5.
Fig. 7 is a side, perspective view of another embodiment of a trap in which food is eaten by a rodent for a period of time before the trap is activated according to an embodiment which is not according to the invention and presented for illustration purposes only.

### DETAILED DESCRIPTION OF THE INVENTION

Embodiments will now be described with reference to the below-identified figures. However, the drawings and the description herein of the invention are not intended to limit the scope of the invention.

In order to accustom a rodent to a trap, the trap is initially set in an area frequented by rodents in an inactive state to provide non-threatening access. Once the inactive trap has been deployed for a period of time, a user may remotely activate the trap.

Rodents will often hesitate to walk into confined spaced, but they will commonly walk on top of things without inhibition. An embodiment which is not according to the invention and presented for illustration purposes only takes advantage of this behavior by providing a trap with a door located on the top thereof. A rodent who walks on the trap doors will fall into the trap.

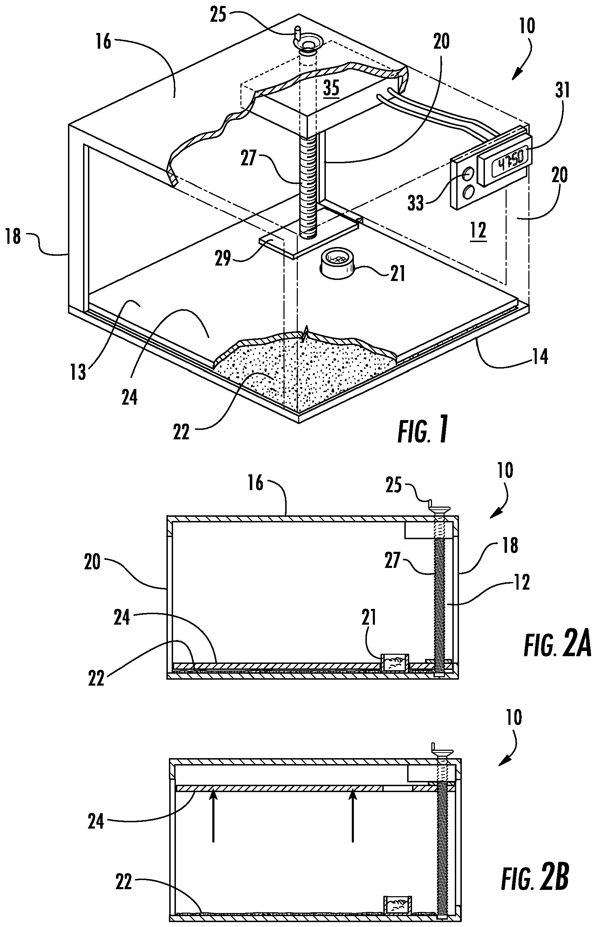

Fig. 1 shows a convertible glue trap. As shown, glue trap 10 is a box, rectangle, tunnel or such similarly shaped structure having an opening on either side thereof. As shown, glue trap 0 has a lower floor surface 14, an upper roof surface 16, two substantially parallel sidewalls 18, 20 and two substantially parallel openings 12, 13. Floor surface 14 has an underside surface that rests on the ground and an upper surface that serves as the floor of the trap 10. A layer of glue 22 is provided on the upper surface of floor surface 14, which is used to trap rodents when the trap 10 is in an active state. In the inactive state, however, glue layer 22 is concealed.

As shown, a retractable cover 24 is placed over and substantially parallel to glue layer 22. In the inactive state, rodents may walk over cover 24 without hesitation, and once they are conditioned to walk into the trap 10 - they will continue to do so even after cover 24 is removed.

As shown in Figs 1, 2A and 2B, cover 24 is a raisable panel that is disposed above and substantially parallel to the glue layer 22. During the inactive state, panel 24 rests on or just above the glue layer 22 blocking the same. A rodent entering the trap 10 through opening 12 or 13 will walk over panel 24, and over a period of time, it will become accustomed to walking into and out of the trap through the non-threatening access. Once the user activates the trap by raising panel 24 to expose glue layer 22, the trap becomes activated, and the next time the rodent enters the trap 10 it will become trapped.

Panel 24, or any similar structure covering glue surface 22, may be raised or removed in different ways. For example, panel 24 is attached to threaded rod 27 or a similar device that is used to raise panel 24 to the top of the trap 10. Rod 27 is a screw or a similar threaded pin having a threaded shaft. Threaded rod 27 mates with a threaded plate 29 that is mounted to the top surface of panel 24. As such, when rod 27 is rotated, plate 29 and attached panel 24 travel upward along the path of the threads on rod 27.

In an embodiment which is not according to the invention and presented for illustration purposes only, panel 24 may be raised by rotating handle 25 attached to threaded rod 27 which raises panel 24.

In an embodiment which is not according to the invention and presented for illustration purposes only, rod 27 is rotated by an internal motor (not shown).

In yet another embodiment which is not according to the invention and presented for illustration purposes only, a small driver or motor for rotating rod 27 may be activated by a wireless signal emanating from a user's smartphone. That is, the trap is designed with a wireless receiver and software/firmware programmed to receive a wireless "activation" command. Upon receipt of such command, controller 35 rotates rod 27, and the panel 24 is raised to activate the trap. For example, trap 10 may be provided with a Bluetooth receiver to receive an "activate" command from a user's smartphone.

In an alternative embodiment which is not according to the invention and presented for illustration purposes only, a trap is provided with a timer (such as an electrical or mechanical timer 31) to "activate" the trap after a specified period of time. For example, a trap may be provided with a manual or electrical timer 31 that may be set by a user with buttons 33 for a designated time period. When the timer reaches the desired time interval it will automatically, "activate" the trap by sending signals to a controller 35 which rotates rod 27.

As shown in Fig. 2B, panel 24 is raised to the top of the trap - thereby exposing the glue surface 22. Panel 24 is preferably raised to a location in close proximity to the roof 16 of the trap 10 so as to allow unobstructed access to the interior of the trap.

In one embodiment which is not according to the invention and presented for illustration purposes only, a bait container 21 is disposed on the upper surface of floor 14. Bait may be inserted into the bait container 21 to entice rodents into the trap 10.

In one embodiment which is not according to the invention and presented for illustration purposes only, glue layer 22 may be covered by a stiff backing sheet or such similar glossy material, which is manually removable to expose the glue layer 22.

The rodent trap/station is capable of receiving a remote signal to effectuate a physical change within the trap/station - thereby changing the trap/station from a first state to a second state, In the first state, harmful substances such as poison or glue are hidden behind or blocked by a physical barrier or blockage ("harmful substances" include materials and instrumentalities that are dangerous to a rodent - including, but not limited to glue, poison, rodenticide, snap jaws or any physical capturing devices). In the second state, the trap is transformed so that the physical barrier is removed - thereby allowing access to the previously concealed or inaccessible harmful substance. Preferably the remote signal used to effectuate a state change is a wireless or Bluetooth signal received from a consumer's smartphone. Such Bluetooth signal serves as a command received by a wireless receiver and software/firmware integrated into the trap/station to perform a specified routine by sending a signal to a controller to remove the physical barrier preventing access to the harmful substance (e.g. lift cover panel 24 off of a glue layer 22 in order to expose the same). It will be understood electric power necessary to perform "activation" can be provided by batteries, a line cord connected to a wall outlet or a combination of the two.

In another embodiment which is not according to the invention and presented for illustration purposes only, a bait station is remotely controllable to be switched from dispensing food to dispensing rodenticide.

In some jurisdictions (e.g. in some European countries) before dispensing rodenticide, a consumer must first determine that rodents are present. This is done by providing edible substances and observing that they were consumed by rodents. Once such confirmation is noted, rodenticide may be dispensed.

In an embodiment of the invention, a single bait station is used to first dispense edible substances (i.e. the "inactive" state) and then, after determining that rodents are present, dispense rodenticide (the "active" state). This allows users to use a single station to demonstrate consumption by rodents and then conveniently activate the same bait station to dispense rodenticide.

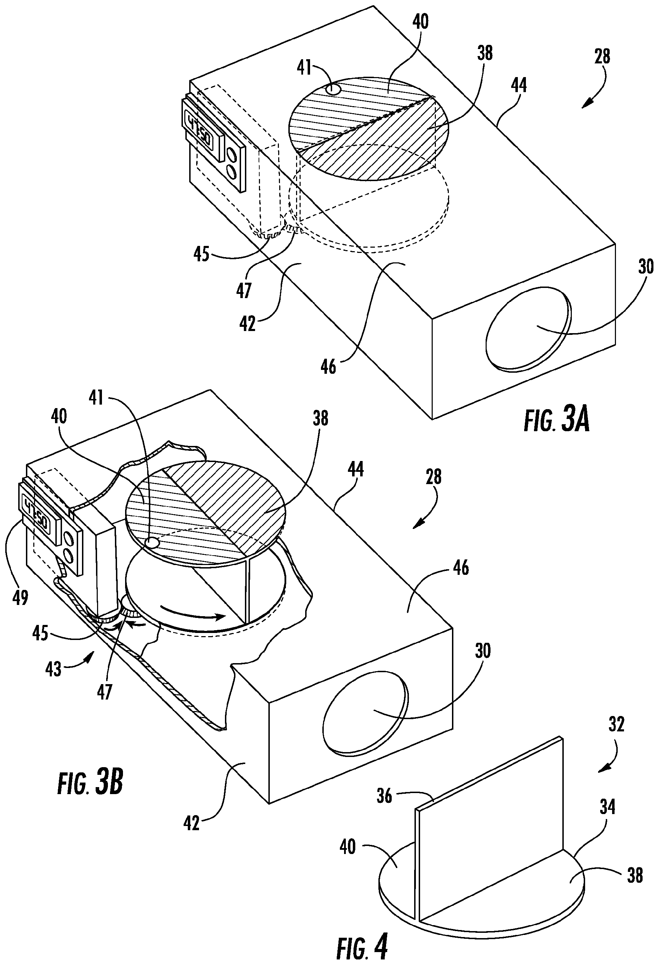

As shown in Figs. 3A, 3B and 4, according to the invention, bait station 28 comprises a substantially rectangular housing having an ingress aperture 30 sized and shaped to receive a mouse or rat. A dual chambered compartment 32 is positioned inside of the housing whereby one side of the compartment 32 contains edible substances, and the other contains rodenticides or similar lethal substances.

As shown in Fig. 4, according to the invention, a bottom plate 34 for receiving substances is shown having a dividing wall 36 vertically positioned across the plate 34. Wall 36, thus, divides plate 34 into two separated sections or compartments (38, 40). The length of wail 36 is substantially the same as the distance between the two inner side walls 42, 44 of bait station 28. Alternatively, and as shown, wall 36 may be shorter than the width of the station 28, provided that a gap between the end of wall 36 and the inner sidewall of the station 28 is not large enough to allow passage of a rodent. The height of wall 36 is substantially the same as the distance between the floor of the bait station and the underside surface of the roof 46 thereof. As such, wall 36 divides the interior of the bait station 28 into two distinct sections.

Referring to Fig. 3A, when a rodent first enters through ingress aperture 30 it can only access the front compartment 38, and it cannot access the compartment 40 behind the wall 36. As such, a user may place edible substances in compartment 38 and rodenticide on rear compartment 40. Once it is determined that rodents are present, a user need only manually rotate bottom plate 34 to make compartment 40 (containing rodenticide) accessible to rodents entering the station 28.

In a preferred embodiment, an upper plate disposed orthogonally to wall 36 and substantially parallel to bottom plate 34. Upper plate is preferably formed of a transparent material in order to allow visibility into the compartments 38, 40 so that a user may observe whether or not edible substances or rodenticide has been consumed by a rodent.

According to the invention, bottom plate 34 is mounted to a motorized rotating mechanism 43 such that bottom plate 34 may be rotated by a user by sending a command from his/her smartphone. Gears 45 and 47 rotate bottom plate 34.

As described above, station 28 is provided with a wireless receiver and software/firmware to activate the station 28 upon receipt of a wireless signal from a user.

As described, in the inactive state, only platform with rodent food is available, and in the active state rodenticide is available when section 40 is rotated to be accessible.

In an embodiment of the invention, station 28 is provided with a manual or electrical timer 49 that may be set by a user for a designated time period. When the timer reaches the desired time interval it will automatically "activate" the trap by sending signals to a controller to rotate motorized mechanism 43. Alternatively, the station 28 may be manually activated by a user manually rotating the bottom plate 34.

In one embodiment of the invention, a camera 41 is located in the upper plate of compartment 32. Camera may be used to capture images of the food and/or rodenticide and wirelessly transmit images to a user's computer, mobile device, and/or smartphone via an integrated wireless transmission mechanism.

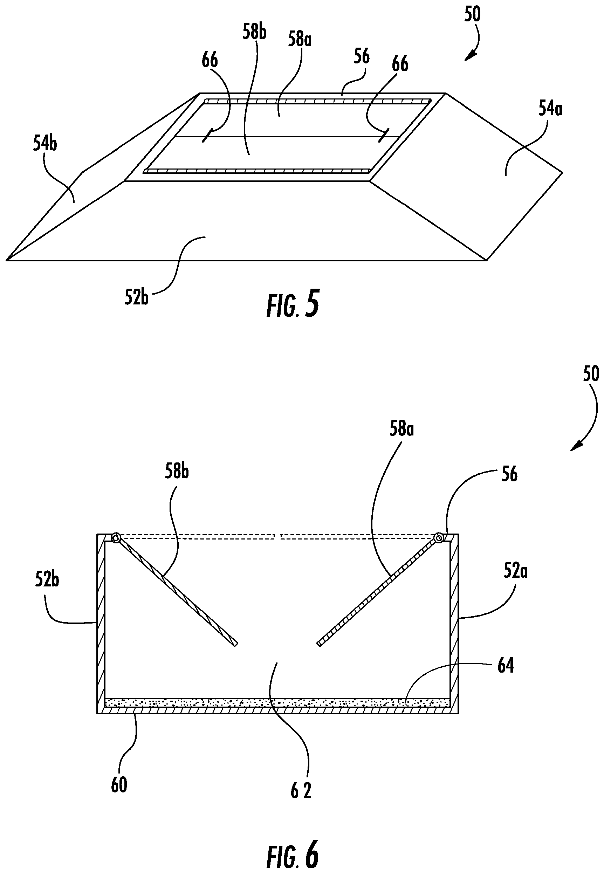

Fig. 5 shows an embodiment which is not according to the invention and presented for illustration purposes only, where trap 50 has a front wall 52b, side walls 54a, 54b and an upper surface 56. In a preferred embodiment which is not according to the invention and presented for illustration purposes only, side wail 54a, 54b begin substantially at the floor and slope upwardly toward upper surface 56 (forming "ramps"). Such ramps provide a surface upon which a rodent will naturally walk which leads it to top surface 56.

In one embodiment which is not according to the invention and presented for illustration purposes only, a bait station may be mounted on upper surface 56 of trap 50. Bait may be inserted into the bait station to further entice a rodent to walk up ramps 54a, 54b.

Top surface 56 has two trap doors 58a, 58b. Trap doors 58a, 58b are hingedly connected to upper surface 56 by way of one more hinges, live hinges or similar pivoting mechanisms. In all embodiments, the hinges are oriented such that the doors 58a, 58b swing downward in response to a rodent walking thereupon.

Walls 52a 52b, 54a 54b, top surface 56 and floor surface 60 (shown in Fig. 6) form a cavity 62 beneath the trap doors 58a, 58b. Cavity 62 is sized and shaped to receive and hold a rodent such as a mouse or a rat captured in the trap 50.

In a preferred embodiment which is not according to the invention and presented for illustration purposes only, trap doors 58a, 58b are held in a closed position (as shown in Fig. 5) by way of a temporary securing mechanism 66 that may be overcome by the weight of a targeted rodent. The temporary securing mechanism may be frangible pins that holds doors 58a and 58b together but easily breaks under the weight of the rodent thus hingedly opening the doors and trapping the rodent. Alternatively, doors 58a and 58b may be held closed by way of a spring, a latch or a similar tenuous supporting structure which may be overcome by the weight of a targeted rodent.

Once a rodent walks across the top surface 56 of trap 50, its weight will cause trap doors 58a, 58b to swing downward (i.e. into the cavity 62 of trap 50) - thereby causing the rodent to become trapped in cavity 62.

As shown in Fig. 6, doors 58a 58b begin at a starting position (dotted lines) and then open downwardly. The interior floor surface of trap 50 may have an adhesive or glue layer 64 for holding a rodent that falls through the trap.

It will be understood that any of various doors or movable/separable floors may be provided on an upper surface of a trap. For instance, in one embodiment which is not according to the invention and presented for illustration purposes only, rather than hinged doors, a single door is mounted over the opening by way of a fixed rod or axle running across a longitudinal axis thereof. Thus, a rodent that steps on either side of the axle will cause the door to swing downwardly on that particular side of the axle. As stated above, any of various tenuous supporting mechanisms (such as a spring or similar device) is utilized to maintain the door in a substantially flat plane atop the upper surface of the trap.

Trap 50 may be used for catch and release rodent control. In such embodiment which is not according to the invention and presented for illustration purposes only, the interior of the trap 50 will not contain a glue layer or mechanical elimination means. Rather, trap doors 58a, 58b are designed to return to their starting position (i.e. closed) once a rodent falls into the rap - thereby trapping a rodent alive.

It will be understood by those of ordinary skill in the art that as an alternative to trap doors 58a and 58b, trap 50 may be provided with a wide opening that is not covered. In such embodiment which is not according to the invention and presented for illustration purposes only, a rodent will walk up one of side ramps (i.e. walls 54a and 54b) and fall into the opening. The trap may be provided with a glue surface or similar capturing means.

In another embodiment of the trap 50 which is not according to the invention and presented for illustration purposes only, it is provided with one or more trap doors on its top surface and an ingress aperture in one or more of the sidewalls. Such trap is capable of trapping a rodent that walks through the ingress aperture or across the top surface thereof.

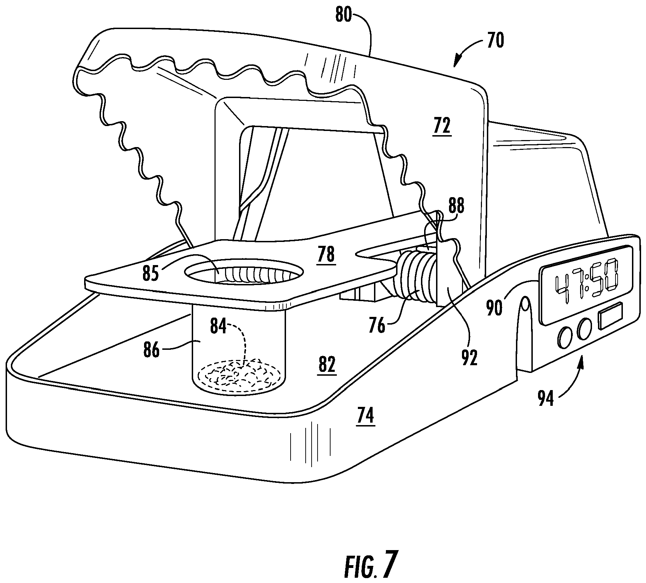

Fig. 7 is a perspective view of another embodiment which is not according to the invention and presented for illustration purposes only, showing another type of trap. This trap is based on Model 621 of AP&G Co., Inc. The trap 70 has a jaw 72, a base 74 with the cover hingedly controlled by coil spring 76. A platform 78 is supported midway between the top 80 of jaw 72 when it is closed and the floor 82 of the base 74. Food 84 is placed within a cylindrical member 86 having an opening disposed in register with the hole in platform 78. When a mouse or other rodent tries to reach the food 84 through aperture 85, its weight or pressure on platform 78 causes top 72 to quickly close, thereby catching the rodent within trap 70.

The description just provided is that of Model 621 as referred to above.

As further shown in Fig. 7, an interlock bar 88 controlled by controller 92 under signal activation by a timer 90 located on the side of trap 70 prevents coil spring 76 from closing until the timer reaches a pre-set period of time. Controller 92 controls the position of interlock bar 88 to convert the trap 70 from inactive to active states. Electronic control signals from timer 90 cause interlock bar to be in such states. Additionally, remote control signals from a smartphone can initiate the electronic control signals to change the position of interlock bar from inactive to active.

Food will be placed as found at 84 in the trap. Enough food is placed in the trap for the rodent to conveniently and comfortably return to eat the food and, after a suitable period of time, the trap becomes activated, and the interlock 88 then allows the trap 70 to perform its normal function. By preventing the trap from closing for a pre-set period of time, for a time remotely controlled, the rodent becomes more comfortable with eating the food, entering the trap which is non-threatening and becomes more easily trapped than found in prior art devices.

As with the other embodiments, the time period to activate the trap can be remotely set by using wireless transmission such as Bluetooth or it could be manually set with the buttons 94 shown on the side of platform 74 in Fig. 7.

It should be understood that the preferred embodiment was described to provide the best illustration of the principles of the invention and its practical application to thereby enable one of ordinary skill in the art to utilize the invention in various embodiments and with various modifications as are suited to the particular use contemplated. All such modifications and variations are within the scope of the invention as determined by the appended claims.

## Claims

1. A bait station rodent trap (28) comprising:
(a) a substantially rectangular housing having two inner side walls (42, 44), a floor and a roof (46) and an ingress aperture (30) sized and shaped to receive a mouse or rat;
(b) a rotatable dual chambered compartment (32) positioned inside of the housing, whereby one side of the dual chambered compartment (32) is for receiving edible substances, and the other contains rodenticides or similar lethal substances, wherein dual chambered compartment (32) comprises a bottom plate (34) for receiving substances and has a dividing wall (36) vertically positioned across the bottom plate (34), such that dividing wall (36) divides the bottom plate (34) into two separate food and rodenticide compartments (38, 40), wherein the height of dividing wall (36) is substantially the same as the distance between the floor of the bait station rodent trap (28) and the underside surface of the roof (46) thereof, and wherein:
(i) the length of dividing wall (36) is substantially the same as the distance between the two inner side walls (42, 44) of bait station rodent trap (28); or
(ii) dividing wall (36) is shorter than the width of bait station rodent trap (28), provided that a gap between the end of dividing wall (36) and the inner sidewall of bait station rodent trap (28) is not large enough to allow passage of a rodent,
(c) a wireless receiver and software/firmware for activating the bait station rodent trap (28) upon receipt of a wireless signal from a user thereby changing the bait station rodent trap (28) from a first state to a second state, wherein in the first state, a rodent cannot access the rodenticide compartment (40) containing rodenticides or similar lethal substances behind dividing wall (36) and it can only access the food compartment (38), and wherein in the second state, dual chambered compartment (32) is rotated such that rodenticide compartment (40) is accessible;
wherein the food compartment (38) of dual chambered compartment (32) contains edible substances; and
wherein the bottom plate (34) is mounted to a motorized rotating mechanism (43) having gears (45 and 47) to rotate the bottom plate (34) such that the bottom plate (34) can be rotated by a user by sending a command using a smartphone.

2. Bait station rodent trap (28) according to claim 1, which is provided with a manual or electrical timer (49) that may be set by a user for a designated time period to activate the bait station rodent trap (28) when the timer (49) reaches the designated time period, by sending signals to a controller to rotate motorized rotating mechanism (43).

3. Bait station rodent trap (28) according to any one of claims 1-2, wherein a camera (41) is located in the upper plate of dual chambered compartment (32).

## Patentansprüche

1. Nagetierfalle (28) mit Köderstation, umfassend:
(a) ein im wesentlichen rechteckiges Gehäuse mit zwei inneren Seitenwänden (42, 44), einem Boden und einem Dach (46) sowie einer Eintrittsöffnung (30), die so dimensioniert und geformt ist, dass sie eine Maus oder Ratte aufnehmen kann;
(b) ein drehbares Zweikammerfach (32), das innerhalb des Gehäuses angeordnet ist, wobei eine Seite des Zweikammerfachs (32) zur Aufnahme von Speisesubstanzen dient, und die andere Rodentizide oder ähnliche tödliche Substanzen enthält, wobei das Zweikammerfach (32) eine Bodenplatte (34) zur Aufnahme von Stoffen aufweist und eine Trennwand (36), die vertikal über der Bodenplatte (34) angeordnet ist, so dass die Trennwand (36) die Bodenplatte (34) in zwei getrennte Futter- und Rodentizidkammern (38, 40) aufteilt, wobei die Höhe der Trennwand (36) im Wesentlichen gleich dem Abstand zwischen dem Boden der Nagetierfalle (28) mit Köderstation und der Unterseite des Daches (46) derselben ist, und wobei:
(i) die Länge der Trennwand (36) im Wesentlichen dem Abstand zwischen den beiden inneren Seitenwänden (42, 44) der Nagetierfalle (28) mit Köderstation entspricht; oder
(ii) die Trennwand (36) kürzer als die Breite der Nagetierfalle (28) mit Köderstation ist, vorausgesetzt, dass ein Spalt zwischen dem Ende der Trennwand (36) und der inneren Seitenwand der Nagetierfalle (28) mit Köderstation nicht groß genug ist, um ein Passieren durch ein Nagetier zu ermöglichen,
(c) einen drahtlosen Empfänger und Software/Firmware zum Aktivieren der Nagetierfalle (28) mit Köderstation nach Erhalt eines Funksignals von einem Benutzer, wodurch die Nagetierfalle (28) mit Köderstation von einem ersten Zustand in einen zweiten Zustand geändert wird, wobei ein Nagetier im ersten Zustand keinen Zugang zu der Rodentizidkammer (40) hat, welche Rodentizide oder ähnliche tödliche Substanzen hinter der Trennwand (36) enthält, und nur Zugang zu der Futterkammer (38) hat, und wobei das Zweikammerfach (32) im zweiten Zustand derart gedreht ist, dass die Rodentizidkammer (40) zugänglich ist;
wobei die Futterkammer (38) des Zweikammerfachs (32) Speisesubstanzen enthält; und
wobei die Bodenplatte (34) an einem motorisierten Drehmechanismus (43) mit Zahnrädern (45 und 47) angebracht ist, um die Bodenplatte (34) derart zu drehen, dass die Bodenplatte (34) von einem Benutzer durch Senden eines Befehls unter Verwendung eines Smartphones gedreht werden kann.

2. Nagetierfalle (28) mit Köderstation nach Anspruch 1, die mit einem manuellen oder elektrischen Zeitgeber (49) versehen ist, der von einem Benutzer für einen bestimmten Zeitraum eingestellt werden kann, um die Nagetierfalle (28) mit Köderstation zu aktivieren, wenn der Zeitgeber (49) den bestimmten Zeitraum erreicht, indem Signale an eine Steuerung gesendet werden, um den motorisierten Drehmechanismus (43) zu drehen.

3. Nagetierfalle (28) mit Köderstation nach einem der Ansprüche 1 - 2, wobei eine Kamera (41) in der oberen Platte des Zweikammerfachs (32) angeordnet ist.

## Revendications

1. Piège à rongeurs de station d'appât (28) comprenant :
(a) un boîtier essentiellement rectangulaire ayant deux parois latérales internes (42, 44), un plancher et un toit (46), et une ouverture d'entrée (30) qui est dimensionnée et mise en forme pour recevoir une souris ou un rat ;
(b) un compartiment à double chambre rotatif (32) qui est positionné à l'intérieur du boîtier, dans lequel un côté du compartiment à double chambre (32) est destiné à recevoir des substances comestibles et l'autre côté contient des rodenticides ou des substances létales similaires, dans lequel le compartiment à double chambre (32) comprend un plateau inférieur (34) servant à recevoir des substances et a une paroi de séparation (36) qui est positionnée verticalement à travers le plateau inférieur (34), de telle sorte que la paroi de séparation (36) divise le plateau inférieur (34) en deux compartiments distincts de nourriture et de rodenticide (38, 40), dans lequel la hauteur de la paroi de séparation (36) est essentiellement identique à la distance entre le plancher du piège à rongeurs de station d'appât (28) et la surface inférieure du plancher (46) de celui-ci, et dans lequel :
(i) la longueur de la paroi de séparation (36) est essentiellement identique à la distance entre les deux parois latérales internes (42. 44) du piège à rongeurs de station d'appât (28) ; ou
(ii) la paroi de séparation (36) est plus courte que la largeur du piège à rongeurs de station d'appât (28), à condition qu'un espace entre l'extrémité de la paroi de séparation (36) et la paroi latérale interne du piège à rongeurs de station d'appât (28) ne soit pas suffisamment grand pour permettre le passage d'un rongeur ;
(c) un récepteur sans fil et un logiciel/micrologiciel servant à activer le piège à rongeurs de station d'appât (28) lors de la réception d'un signal sans fil provenant d'un utilisateur, faisant ainsi passer le piège à rongeurs de station d'appât (28) d'un premier état à un deuxième état, dans lequel, dans le premier état, un rongeur ne peut pas accéder au compartiment de rodenticide (40) contenant des rodenticides ou des substances létales similaires derrière la paroi de séparation (36) et ne peut accéder qu'au compartiment de nourriture (38), et dans lequel, dans le deuxième état, le compartiment à double chambre (32) est mis en rotation de telle sorte à rendre le compartiment de rodenticide (40) accessible, et
dans lequel le plateau inférieur (34) est monté sur un mécanisme de rotation motorisé (43) ayant des engrenages (45 et 47) pour faire mettre en rotation le plateau inférieur (34) de telle sorte que le plateau inférieur (34) peut être mis en rotation par un utilisateur en envoyant une commande par le biais d'un smartphone.

2. Piège à rongeurs de station d'appât (28) selon la revendication 1, lequel est doté d'une minuterie manuelle ou électrique (49) qui peut être réglée par un utilisateur pour une période de temps désignée afin d'activer le piège à rongeurs de station d'appât (28) lorsque la minuterie (49) atteint la période de temps désignée, en envoyant des signaux à un contrôleur pour mettre en rotation le mécanisme de rotation motorisé (43).

3. Piège à rongeurs de station d'appât (28) selon l'une quelconque des revendications 1 à 2, dans lequel une caméra (41) est située dans le plateau supérieur du compartiment à double chambre (32).
